# EUROPEAN PATENT APPLICATION

(11) **EP 2 108 992 A1**
(43) Date of publication of application: **14.10.2009**
(21) Application number: 09155989.8
(22) Date of filing: 24.03.2009
(51) Int. Cl.: G02B 26/06, G02B 26/08

(54) **System, device, and method for optical wavefront control**

(30) Priority: 07.04.2008 JP 2008098892
(71) Applicant: Fujitsu Limited, Kawasaki-shi, Kanagawa 211-8588 (JP); The University of Tokyo, Bunkyo-ku, Tokyo 113-8654 (JP)
(72) Inventor: Yamashita, Shinji, Kanagawa 211-8588 (JP); Yamamoto, Tsuyoshi, Kanagawa 211-8588 (JP); Kawai, Masaaki, Kanagawa 211-8588 (JP); Fujita, Hiroyuki, Tokyo 113-8656 (JP)
(74) Representative: HOFFMANN EITLE

(57) **Abstract**

An optical wavefront control system by which the number of optical components or costs can be reduced. If an optical wavefront control system comprising an optical wavefront control section for controlling, in accordance with a wavefront control signal for controlling a phase of a wavefront of input light inputted and an aberration control signal for controlling an aberration of the input light inputted, the phase and the aberration and for outputting output light, a detection section for detecting optical information regarding a wavefront and an aberration of the output light inputted from the optical wavefront control section, and a control circuit section for outputting the wavefront control signal and the aberration control signal to the optical wavefront control section on the basis of the optical information detected by the detection section is used, the wavefront of the input light can be controlled and the aberration can be corrected. Accordingly, there is no need to locate another optical component for correcting the aberration.

## Description

### BACKGROUND OF THE INVENTION

### (1) Field of the Invention

This invention relates to an optical wavefront control system, an optical wavefront control device, and an optical wavefront control method and, more particularly, to an optical wavefront control system, an optical wavefront control device, and an optical wavefront control method for controlling a wavefront of input light and outputting wavefront-shaped output light.

### (2) Description of the Related Art

In the field of optical communication and optical signal processing, the necessity of controlling the phase of an optical wavefront has increased and optical wavefront control devices for shaping a femto-second optical pulse, for correcting distortion of the shape of a space light beam, or for controlling the phase of an optical wavefront are used.

Descriptions will now be given with an optical wavefront control device using micromirrors for controlling an optical wavefront (see, for example, U.S. Patent No. 6,713,367) as an example.

A plurality of micromirrors included in an optical wavefront control device are arranged like a one-dimensional array and these micromirrors can be translated up or down (translation) or be rotated clockwise or counterclockwise independently of one another.

With this optical wavefront control device, the following method is used for controlling a phase of an optical wavefront. A wavefront lag or lead of input light can be adjusted by changing the height of each micromirror. Light reflected from a low micromirror travels along a long optical path. This causes a propagation delay and therefore a phase lag is obtained. In addition, a continuous phase profile can be generated by adjusting the tilt angle of each micromirror. If a variable move amount of each micromirror is larger than or equal to half of the wavelength of the input light, then the amount of a phase lag caused by reflection is greater than or equal to 2π.
Therefore, an arbitrary phase lag can be given.

In recent years the demand for two-dimensional optical wavefront control devices which provide a higher degree of freedom in control has been developing. With the above optical wavefront control device, one-dimensional optical wavefront control is exercised. The micromirrors included in this optical wavefront control device are arranged two-dimensionally or one thin-film mirror is controlled two-dimensionally (see, for example, G. Vdovin and P. M. Sarro, "Flexible mirror micromachined in silicon", Applied Optics, Vol. 34, No. 16, 1995, pp. 2968-2972). By doing so, optical wavefront control can be exercised two-dimensionally.

However, the surface of ordinary optical wavefront control devices has a square shape one side of which is several millimeters to several centimeters in length (or a round shape having a diameter of several millimeters to several centimeters). As a result, an image is blurry by the influence of, for example, an aberration which occurs in a condensing optical system. Therefore, it is necessary to correct an aberration which occurs in a condensing optical system. That is to say, input light must be inputted to an optical wavefront control device via an optical system, such as a non-spherical lens, for correcting the aberration.

However, if input light is inputted to an optical wavefront control device via an optical system, such as a non-spherical lens, for correcting an aberration which occurs in a condensing optical system, then the number of optical components or costs rise.

### SUMMARY OF THE INVENTION

The present invention was made under the background circumstances described above. An object of the present invention is to provide an optical wavefront control system and an optical wavefront control method by which the number of optical components or costs are reduced. In addition, an object of the present invention is to provide an optical wavefront control device used in the optical wavefront control system and the optical wavefront control method.

In order to achieve the above first object, an optical wavefront control system for controlling a wavefront of input light and for outputting wavefront-shaped output light is provided. This optical wavefront control system comprises an optical wavefront control section for controlling, in accordance with a wavefront control signal for controlling a phase of the wavefront of the input light inputted and an aberration control signal for controlling an aberration of the input light inputted, the phase and the aberration and for outputting the output light, a detection section for detecting optical information regarding a wavefront and an aberration of the output light inputted from the optical wavefront control section, and a control circuit section for outputting the wavefront control signal and the aberration control signal to the optical wavefront control section on the basis of the optical information detected by the detection section.

In addition, in order to achieve the above second object, an optical wavefront control device for controlling a wavefront of input light and for outputting wavefront-shaped output light is provided. This optical wavefront control device comprises a mirror substrate having a bottom portion including a frame-like supporting substrate layer and a frame-like intermediate layer formed in order and a device portion which is formed over the bottom portion, in which inner walls, torsion bars, and a micromirror are integrally formed, and over a frame portion of which spacers are formed, an upper glass substrate over which a plurality of transparent electrodes are arranged right over a reflecting surface of the micromirror and which is joined to the mirror substrate with the spacers between, and a lower glass substrate which has a projection which is equal in height to the intermediate layer and over which an electrode is formed, and which is connected to the mirror substrate by fitting the projection into the bottom portion.

Furthermore, in order to achieve the above first object, an optical wavefront control method for controlling a wavefront of input light and for outputting wavefront-shaped output light is provided. This optical wavefront control method comprises the steps of controlling, by an optical wavefront control section in accordance with a wavefront control signal for controlling a phase of the wavefront of the input light inputted and an aberration control signal for controlling an aberration of the input light inputted, the phase and the aberration and outputting the output light, detecting, by a detection section, optical information regarding a wavefront and an aberration of the output light inputted from the optical wavefront control section, and outputting, by a control circuit section, the wavefront control signal and the aberration control signal to the optical wavefront control section on the basis of the optical information detected by the detection section.

The above and other objects, features and advantages of the present invention will become apparent from the following description when taken in conjunction with the accompanying drawings which illustrate preferred embodiments of the present invention by way of example.

### BRIEF DESCRIPTION OF THE DRAWINGS

Fig. 1 is a schematic view for giving an overview of embodiments of the present invention.
Fig. 2 is a schematic view showing an optical wavefront control system according to a first embodiment of the present invention.
Fig. 3 is a schematic perspective view showing an optical wavefront control section included in the optical wavefront control system according to the first embodiment of the present invention.
Figs. 4(A), 4(B), 4(C), 4(D), and 4(E) are fragmentary schematic sectional views showing the steps of fabricating a mirror substrate included in the optical wavefront control section included in the optical wavefront control system according to the first embodiment of the present invention.
Fig. 5 is a schematic sectional view showing the optical wavefront control section included in the optical wavefront control system according to the first embodiment of the present invention.
Figs. 6(A), 6(B), and 6(C) are schematic sectional views for describing the principles underlying the operation of the optical wavefront control section included in the optical wavefront control system according to the first embodiment of the present invention.
Fig. 7 is a schematic perspective view showing a lower glass substrate of an optical wavefront control section included in an optical wavefront control system according to a second embodiment of the present invention.
Figs. 8(A) and 8(B) are schematic sectional views for describing the principles underlying the operation of the optical wavefront control section included in the optical wavefront control system according to the second embodiment of the present invention.
Fig. 9 is a schematic perspective view showing an optical wavefront control section included in an optical wavefront control system according to a third embodiment of the present invention.
Figs. 10(A) and 10(B) are schematic sectional views for describing the principles underlying the operation of the optical wavefront control section included in the optical wavefront control system according to the third embodiment of the present invention.
Fig. 11 is a schematic plan view showing a mirror substrate included in an optical wavefront control section included in an optical wavefront control system according to a fourth embodiment of the present invention.
Figs. 12(A) and 12(B) are schematic plan views showing an upper glass substrate and a lower glass substrate, respectively, included in the optical wavefront control section included in the optical wavefront control system according to the fourth embodiment of the present invention.
Fig. 13 is a schematic plan view showing another upper glass substrate included in the optical wavefront control section included in the optical wavefront control system according to the fourth embodiment of the present invention.

### DESCRIPTION OF THE PREFERRED EMBODIMENTS

An overview of embodiments of the present invention will now be given with reference to the drawing. Then the embodiments of the present invention based on the overview will be described with reference to the drawings. However, the technical scope of the present invention is not limited to these embodiments.

An overview of embodiments of the present invention will be given first with reference to the drawing.

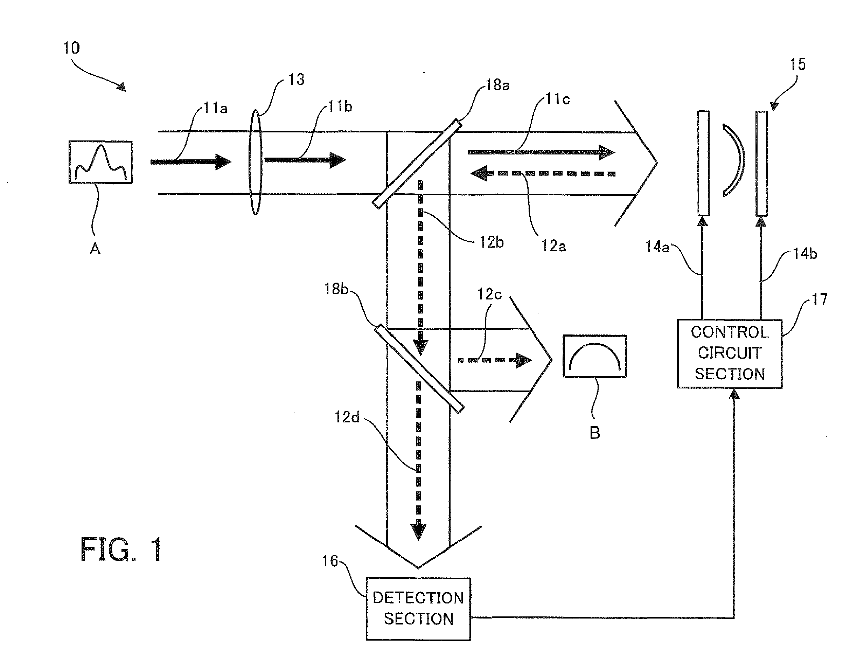

Fig. 1 is a schematic view for giving an overview of embodiments of the present invention.

An optical wavefront control system 10 comprises an input optical system 13 for collimating input light 11a inputted from the outside and for outputting input light 11b, an optical wavefront control section 15 for inputting input light 11c which has passed through an optical path change section 18a and for outputting output light 12a, a detection section 16 for detecting the output light 12a which is reflected from the optical path change section 18a and which passes through an optical path change section 18b as output light 12d, and a control circuit section 17.

The input optical system 13 adjusts (collimates) the input light 11a inputted from the outside to generate the parallel input light 11b which travels approximately straight through space. For example, really beams of light such as laser beams are not completely parallel beams. That is to say, laser beams diffuse as they travel farther. Accordingly, the input optical system 13 is used for collimating the input light 11a inputted from the outside into the parallel input light 11b and for outputting the input light 11b to the optical wavefront control section 15.

On the basis of a wavefront control signal 14a and an aberration control signal 14b which are sent from the control circuit section 17 and which will be described later, the optical wavefront control section 15 can control a wavefront of the input light 11c which is part of the input light 11b that has passed through the optical path change section 18a, and correct an aberration. The optical wavefront control section 15 controls the input light 11c and outputs the output light 12a.

The detection section 16 detects optical information regarding a wavefront and an aberration of the output light 12d. The optical information detected is outputted to the control circuit section 17. The output light 12d is part of output light 12b that has passed through the optical path change section 18b. The output light 12b is part of the output light 12a that has been reflected from the optical path change section 18a. Part of the output light 12b is reflected from the optical path change section 18b and is outputted to the outside as output light 12c.

If it is necessary on the basis of the optical information detected by the detection section 16 to control the wavefront of the input light 11c, then the control circuit section 17 outputs the wavefront control signal 14a for controlling the wavefront to the optical wavefront control section 15. If the aberration has an influence on the input light 11c on the basis of the optical information detected by the detection section 16, then the control circuit section 17 outputs the aberration control signal 14b for correcting the aberration to the optical wavefront control section 15. If it is necessary to both control the wavefront of the input light 11c and correct the aberration, then the control circuit section 17 outputs both of the wavefront control signal 14a and the aberration control signal 14b to the optical wavefront control section 15.

With the optical wavefront control system 10 having the above structure, the optical wavefront control section 15 controls the wavefront of the input light 11c which has passed through the optical path change section 18a, corrects the aberration, and outputs the output light 12a. The output light 12b is the part of the output light 12a that has been reflected from the optical path change section 18a. The part of the output light 12b is reflected from the optical path change section 18b and is outputted to the outside as the output light 12c. At the same time the part of the output light 12b that has passed through the optical path change section 18b is inputted to the detection section 16 as the output light 12d. The detection section 16 detects the optical information regarding the wavefront and the aberration of the output light 12d. The control circuit section 17 outputs the wavefront control signal 14a and the aberration control signal 14b to the optical wavefront control section 15 on the basis of the optical information detected. The optical wavefront control section 15 controls the wavefront and the aberration of the input light 11c on the basis of the wavefront control signal 14a and the aberration control signal 14b. For example, if the input light 11a has a waveform A, then a user can obtain the output light 12c having a desired waveform B by repeating this process. With the optical wavefront control system 10, the optical wavefront control section 15 controls the wavefront of the input light 11c and corrects the aberration. In this case, there is no need to locate another optical component for correcting the aberration. Accordingly, with the optical wavefront control system 10 it is possible to control the optical wavefront and correct the aberration, while reducing the number of optical components and costs.

A first embodiment of the present invention will now be described.

A first embodiment of the present invention is based on the above overview.

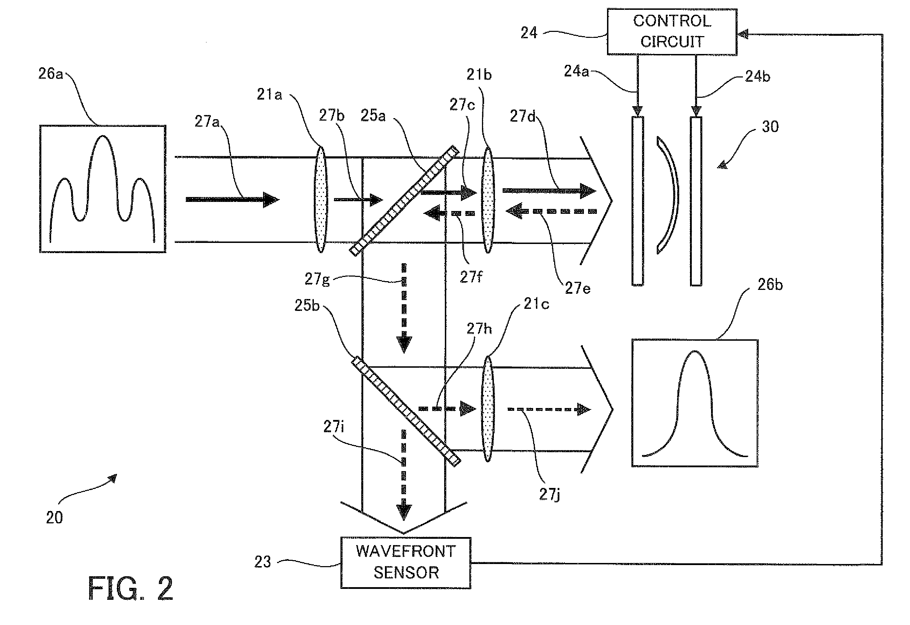

Fig. 2 is a schematic view showing an optical wavefront control system according to a first embodiment of the present invention.

An optical wavefront control system 20 comprises a collimating optical system 21a for collimating input light 27a inputted form the outside, a condensing optical system 21b for condensing light and outputting light 27b, an optical wavefront control section 30 for outputting light 27e, a wavefront sensor 23 for detecting light 27i which is part of light 27f that has been reflected from a beam splitter 25a and that has passed through a beam splitter 25b, a condensing optical system 21c for condensing light 27h which is part of light 27g that has been reflected from the beam splitter 25b and for outputting condensed light 27j, a wavefront monitor (not shown) for imaging the light 27j, and a control circuit 24.

The collimating optical system 21a collimates the input light 27a inputted from, for example, an external laser into the parallel light 27b which travels approximately straight through space, and outputs the light 27b to the condensing optical system 21b. An optical component into which a laser, for example, which outputs the input light 27a and the collimating optical system 21a are integrated may be used.

Part of the light 27b passes through the beam splitter 25a and is outputted as light 27c. In addition, part of the light 27f is reflected from the beam splitter 25a and is outputted as the light 27g.

The condensing optical system 21b condenses the light 27c which has passed through the beam splitter 25a and outputs light 27d a cross section of which is approximately equal in size to a light receiving aperture of the optical wavefront control section 30. In addition, the condensing optical system 21b condenses the light 27e and outputs the light 27f.

In accordance with control signals 24a and 24b which are sent from the control circuit 24 and which will be described later, the optical wavefront control section 30 can control a wavefront of the light 27d inputted and correct an aberration. The optical wavefront control section 30 controls the light 27d and outputs the light 27e. The optical wavefront control section 30 will be described later in detail.

The light 27g is the part of the light 27f that has been reflected from the beam splitter 25a. Part of the light 27g passes through the beam splitter 25b and is outputted as the light 27i. The part of the light 27g that has been reflected from the beam splitter 25b is outputted as the light 27h.

The wavefront sensor 23 detects the light 27i that has passed through the beam splitter 25b. The wavefront sensor 23 detects a wavefront and an aberration of the light 27i controlled and outputs detection results to the control circuit 24.

On the basis of the results detected by the wavefront sensor 23, the control circuit 24 determines whether it is necessary to control the wavefront of the light 27d or whether the aberration has had an influence on the light 27d. If it is necessary to control the wavefront of the light 27d, then the control circuit 24 outputs the control signal 24a for controlling the wavefront to the optical wavefront control section 30. If the aberration has had an influence on the light 27d, then the control circuit 24 outputs the control signal 24b for correcting the aberration to the optical wavefront control section 30. For example, a signal based on a Zernike polynomial is used as the control signal 24b for correcting the aberration.

The condensing optical system 21c condenses part of the light 27h which has been reflected from the beam splitter 25b, and outputs the light 27j a cross section of which is approximately equal in size to a light receiving aperture of the wavefront monitor (not shown).

The wavefront monitor produces and displays a two-dimensional image of the light 27j inputted.

The beam splitters 25a and 25b are used for changing optical paths of the above light. However, half mirrors or circulators may be used in place of the beam splitters 25a and 25b.

Moreover, the optical wavefront control section 30 included in the optical wavefront control system 20 will be described.

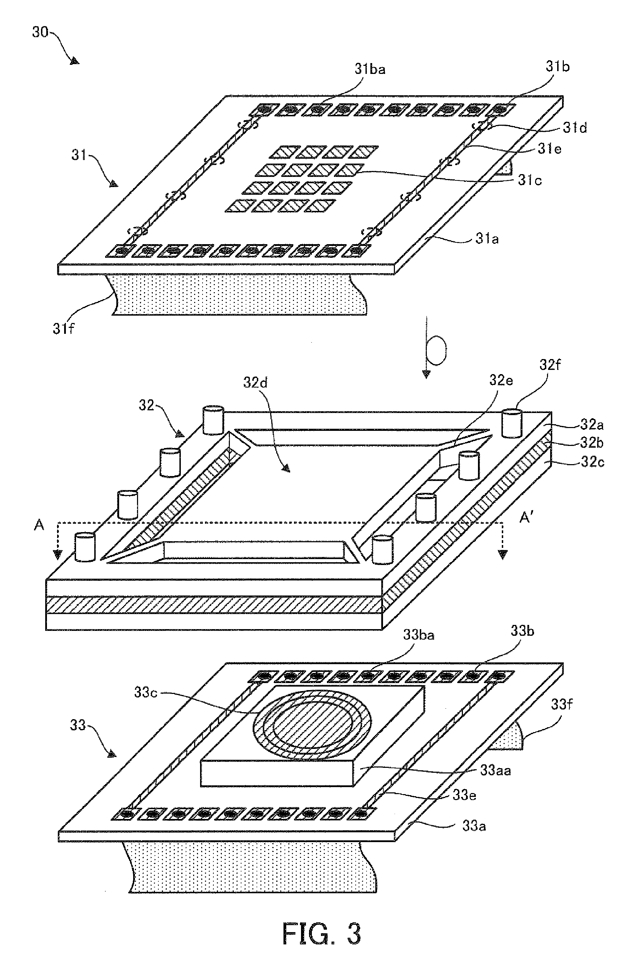

Fig. 3 is a schematic perspective view showing the optical wavefront control section included in the optical wavefront control system according to the first embodiment of the present invention.

The optical wavefront control section 30 includes an upper glass substrate 31, a mirror substrate 32, and a lower glass substrate 33. The upper glass substrate 31, the mirror substrate 32, and the lower glass substrate 33 shown in Fig. 3 are separated from one another, but in reality the upper glass substrate 31, the mirror substrate 32, and the lower glass substrate 33 are combined into the optical wavefront control section 30. When the upper glass substrate 31, the mirror substrate 32, and the lower glass substrate 33 are combined, the upper glass substrate 31 (shown in Fig. 3) is reversed so that spacers 32f formed over the mirror substrate 32 will be joined to spacer pasting positions 31d.

The upper glass substrate 31 includes a glass substrate 31a over which electrode pads 31b, indium tin oxide film (ITO) electrodes 31c, and micromirror potential wirings 31e are formed and over which the spacer pasting positions 31d are marked and flexible substrates 31f.

With the upper glass substrate 31 having the above structure, the glass substrate 31a is coated with an ITO by the use of a transparent electrode pattern. Then mask exposure and etching are performed. By doing so, the ITO electrodes 31c can be formed easily. The ITO electrodes 31c are connected to the electrode pads 31b by wirings (not shown). The flexible substrates 31f to which the control signal 24a is inputted from the external control circuit 24 are connected to the electrode pads 31b via penetrating electrodes 31ba. In addition, the micromirror potential wirings 31e for electrically connecting the electrode pads 31b are formed. The spacer pasting positions 31d where the spacers 32 for electrically connecting the micromirror potential wirings 31e to the mirror substrate 32 are pasted are marked over the micromirror potential wirings 31e. As a result, voltage controlled by the external control circuit 24 can be applied to the electrode pads 31b and the ITO electrodes 31c via the flexible substrates 31f. For example, the upper glass substrate 31 is 5 to 50 mm in length, 5 to 50 mm in breadth, and 100 µm to 1 mm in thickness.

The lower glass substrate 33 includes a glass substrate 33a over which electrode pads 33b and micromirror potential wirings 33e are formed and flexible substrates 33f. This is the same with the upper glass substrate 31. The flexible substrates 33f are mounted so that they will be touching penetrating electrodes 33ba. This is the same with the upper glass substrate 31. Unlike the upper glass substrate 31, however, a projection 33aa over which an electrode 33c like concentric circles is formed is formed over the lower glass substrate 33.

With the lower glass substrate 33 having the above structure, the electrode 33c formed over the projection 33aa is connected to the electrode pads 33b by wirings (not shown). The flexible substrates 33f to which the control signal 24b is inputted from the external control circuit 24 are connected to the electrode pads 33b via penetrating electrodes 33ba. In addition, the micromirror potential wirings 33e for electrically connecting the electrode pads 33b are formed. As a result, voltage controlled by the external control circuit 24 can be applied to the electrode pads 33b and the electrode 33c via the flexible substrates 33f. This is the same with the upper glass substrate 31. For example, the lower glass substrate 33 is 5 to 50 mm in length, 5 to 50 mm in breadth, and 100 to 2,000 µm in thickness. For example, the projection 33aa is 100 µm to 5 mm in length, 100 µm to 5 mm in breadth, and 10 µm to 1 mm in height. The projection 33aa is made equal in height to a silicon oxide (SiO₂) layer 32b of the mirror substrate 32.

The mirror substrate 32 has a silicon on insulator (SOI) structure including a silicon (Si) substrate 32a as a device layer, the SiO₂ layer 32b as an intermediate layer, and a Si layer 32c as a supporting substrate layer. In addition, inner walls of the Si substrate 32a, torsion bars 32e, and a micromirror 32d are integrally formed. The SiO₂ layer 32b and the Si layer 32c are like a frame. In order to raise the reflectance of the micromirror 32d, a metal film may be formed on the surface of the micromirror 32d. Moreover, the spacers 32f are formed over a frame portion of the Si substrate 32a. As stated above, the spacers 32f are joined to the spacer pasting positions 31d marked over the micromirror potential wirings 31e of the upper glass substrate 31 as spacers between the upper glass substrate 31 and the mirror substrate 32. The spacers 32f are solder bumps of, for example, gold (Au) and tin (Sn) and also functions as wirings for supplying potential to be applied from the micromirror potential wirings 31e connected to the electrode pads 31b to the micromirror 32d to the Si substrate 32a. For example, the mirror substrate 32 is 100 to 3,000 µm in length, 100 to 3,000 µm in breadth, and 10 to 3,000 µm in thickness. For example, the micromirror 32d is 0.1 to 100 µm in length, 0.1 to 100 µm in breadth, and 0.1 to 500 µm in thickness.

Furthermore, a method for fabricating the mirror substrate 32 will be described.

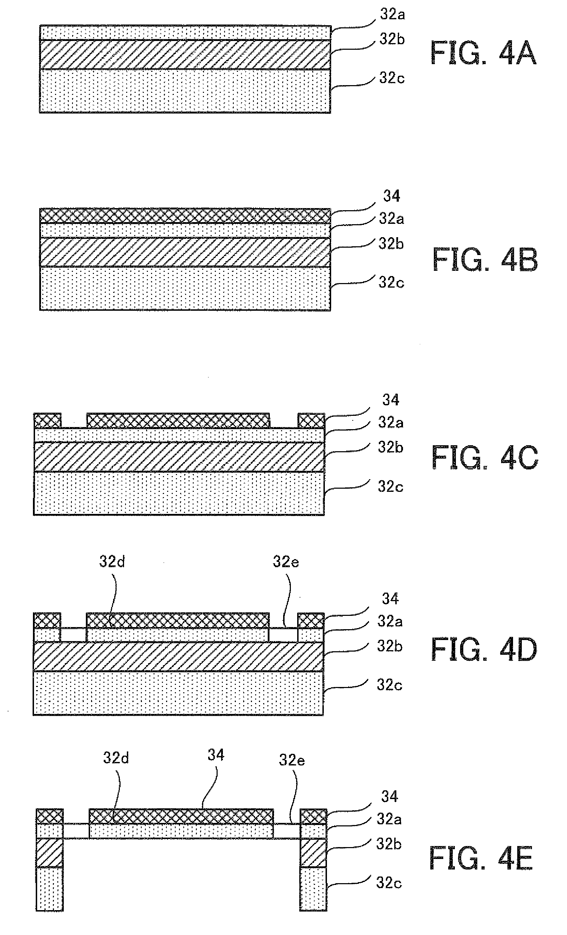

Figs. 4(A), 4(B), 4(C), 4(D), and 4(E) are fragmentary schematic sectional views showing the steps of fabricating the mirror substrate included in the optical wavefront control section included in the optical wavefront control system according to the first embodiment of the present invention. Figs. 4(A), 4(B), 4(C), 4(D), and 4(E) are sectional views taken along the dashed line A-A' of Fig. 3.

The SOI structure is made first by forming the Si layer 32c, the SiO₂ layer 32b, and the Si substrate 32a in that order (Fig. 4(A)).

Then metalization is performed on the surface of the Si substrate 32a included in the SOI structure by the use of Au/chromium (Cr) to form a metal film 34 (Fig. 4(B)).

Then exposure is performed on the SOI structure on which metalization has been performed by the use of a mask on which a pattern for forming the micromirror 32d is formed, and deep reactive ion etching (DRIE) is performed. By doing so, part of the metal film 34 is removed (Fig. 4(C)).

Then the Si substrate 32a is etched with the metal film 34 as a mask to form the micromirror 32d and the torsion bars 32e (Fig. 4(D)).

After the Si substrate 32a is etched, the SiO₂ layer 32b is removed by the use of, for example, hydrofluoric acid (HF). Then the inside of the Si layer 32c is etched (Fig. 4(E)).

Then the spacers 32f are formed over the frame portion of the Si substrate 32a. By doing so, the mirror substrate 32 is formed.

The upper glass substrate 31 is connected to the mirror substrate 32 having the above structure via the spacers 32f. Furthermore, the lower glass substrate 33 is joined to the mirror substrate 32 from the underside by fitting the projection 33aa. By doing so, the optical wavefront control section 30 can be formed.

The optical wavefront control section 30 fabricated in this way will be described.

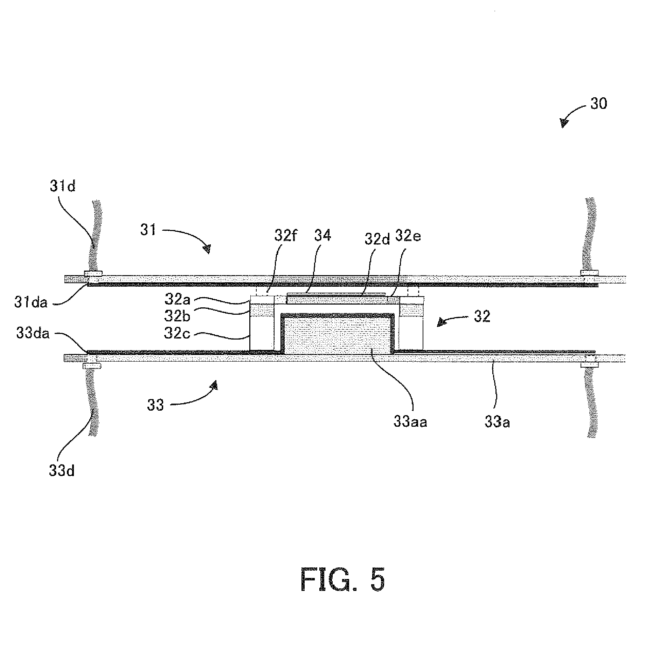

Fig. 5 is a schematic sectional view showing the optical wavefront control section included in the optical wavefront control system according to the first embodiment of the present invention. Fig. 5 is also a sectional view taken along the dashed line A-A' of Fig. 3. Each member has already been described, so descriptions of it will be omitted.

With the optical wavefront control section 30, the upper glass substrate 31 is connected to the mirror substrate 32 via the spacers 32f and the lower glass substrate 33 is joined to the mirror substrate 32 by fitting the projection 33aa. The metal film 34 is formed over the micromirror 32d shown in Fig. 5.

Controlling an optical wavefront and correcting an aberration by the use of the optical wavefront control section 30 having the above structure will now be described.

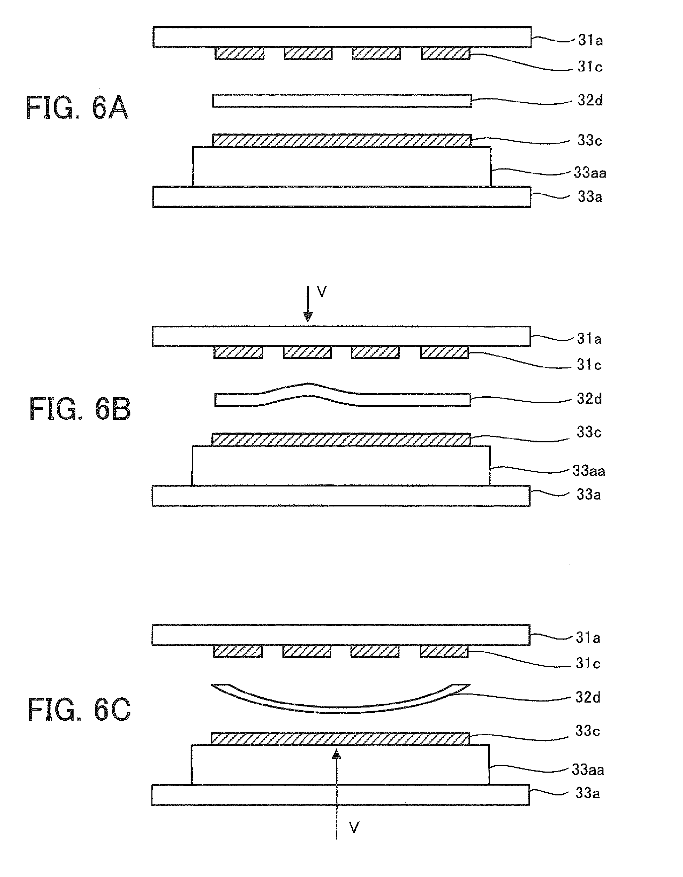

Figs. 6(A), 6(B), and 6(C) are schematic sectional views for describing the principles underlying the operation of the optical wavefront control section included in the optical wavefront control system according to the first embodiment of the present invention. In Figs. 6(A), 6(B), and 6(C), only the micromirror 32d of the mirror substrate 32 is shown. The spacers 32f, the frame portion of the Si substrate 32a over which the spacers 32f are formed, the SiO₂ layer 32b, the Si layer 32c, and the torsion bars 32e are not shown.

First, as stated above and shown in Fig. 6(A), the micromirror 32d is between the ITO electrodes 31c formed over the glass substrate 31a of the upper glass substrate 31 and the electrode 33c formed over the projection 33aa formed over the glass substrate 33a of the lower glass substrate 33 when voltage is not applied to the optical wavefront control section 30.

Then a description will be given with reference to Fig. 6(B). Voltage V is applied to, for example, a second ITO electrode 31c from the left of the upper glass substrate 31. As a result, attraction is exerted on a region of the micromirror 32d approximately right under the ITO electrode 31c to which the voltage V is applied, so the micromirror 32d is distorted as if it is being pulled upward.

Then a description will be given with reference to Fig. 6(C). The voltage V is applied to, for example, the electrode 33c of the lower glass substrate 33. As a result, attraction is exerted on the micromirror 32d, so the micromirror 32d is distorted with the torsion bars 32e as supports as if it is being pulled downward.

By applying the voltage V to an ITO electrode 31c of the upper glass substrate 31 and/or the electrode 33c of the lower glass substrate 33 in this way, attraction is exerted on the micromirror 32d and the micromirror 32d is distorted upward or downward. In particular, controlling the micromirror 32d by the use of an ITO electrode 31c of the upper glass substrate 31 causes a lag in the phase of the light 27d inputted. That is to say, a wavefront of the light 27d can be controlled. As shown in Fig. 2, for example, if light 26a two-dimensionally displayed as the input light 27a is inputted to the optical wavefront control system 20, the above control is exercised and light 26b two-dimensionally displayed as an output wave by the wavefront monitor can be obtained. In addition, by controlling the micromirror 32d by the use of the electrode 33c of the lower glass substrate 33, an aberration can be corrected. Therefore, the optical wavefront control section 30 can control the wavefront of the light 27d and correct the aberration. In addition, with the optical wavefront control section 30 included in the optical wavefront control system according to the first embodiment of the present invention, the ITO electrodes 31c are formed over the upper glass substrate 31 like a grid, so the micromirror 32d can be controlled with great accuracy.

With the optical wavefront control system 20 having the above structure, the input light 27a inputted from the outside passes through the collimating optical system 21a, the beam splitter 25a, and the condensing optical system 21b and is outputted as the light 27d. The optical wavefront control section 30 controls the wavefront of the light 27d and corrects the aberration. The light 27e which has been controlled by the optical wavefront control section 30 passes through the condensing optical system 21b, is reflected from the beam splitter 25a, passes through the beam splitter 25b, and is outputted as the light 27i. The wavefront sensor 23 detects optical information regarding the light 27i. On the basis of results detected by the wavefront sensor 23, the control circuit 24 outputs the control signal 24a for controlling the wavefront of the light 27d and the control signal 24b for correcting the aberration of the light 27d to the upper glass substrate 31 and the lower glass substrate 33, respectively, of the optical wavefront control section 30. By repeating such optical control, desired light can be obtained. Accordingly, if the optical wavefront control system 20 is used, it is possible to control the optical wavefront and correct the aberration, while reducing the number of optical components and costs.

A second embodiment of the present invention will now be described.

An optical wavefront control system according to a second embodiment of the present invention differs from the optical wavefront control system according to the first embodiment of the present invention in the shape of electrode of lower glass substrate of optical wavefront control section. With a second embodiment of the present invention, descriptions will be given with the case where electrodes are arranged like a grid over a lower glass substrate of an optical wavefront control section as an example.

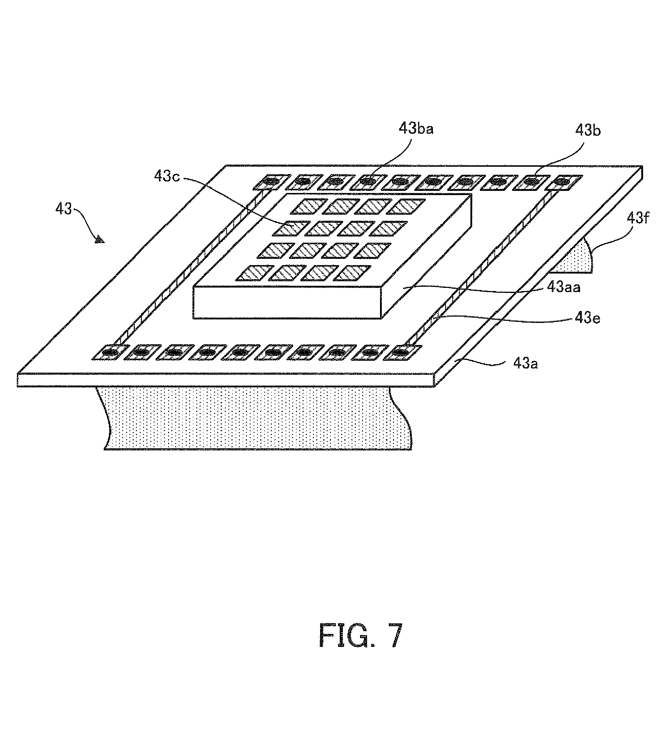

Fig. 7 is a schematic perspective view showing a lower glass substrate of an optical wavefront control section included in an optical wavefront control system according to a second embodiment of the present invention. Only a lower glass substrate 43 is shown in Fig. 7, but in reality the upper glass substrate 31 and the mirror substrate 32 of the optical wavefront control section 30 included in the optical wavefront control system according to the first embodiment of the present invention are also included in an optical wavefront control section.

A lower glass substrate 43 includes a glass substrate 43a over which electrode pads 43b and micromirror potential wirings 43e are formed and flexible substrates 43f. The flexible substrates 43f are mounted so that they will be touching penetrating electrodes 43ba. A projection 43aa is formed over the lower glass substrate 43 and a plurality of electrodes 43c are formed like a grid over the projection 43aa. This is the same with the ITO electrodes 31c of the upper glass substrate 31. For example, the lower glass substrate 43 is 5 to 50 mm in length, 5 to 50 mm in breadth, and 100 to 2,000 µm in thickness. For example, the projection 43aa is 100 µm to 5 mm in length, 100 µm to 5 mm in breadth, and 10 µm to 1 mm in height. The projection 43aa is made equal in height to the SiO₂ layer 32b of the mirror substrate 32.

The principles underlying controlling an optical wavefront and correcting an aberration by the use of the optical wavefront control section including the lower glass substrate 43 having the above structure will now be described.

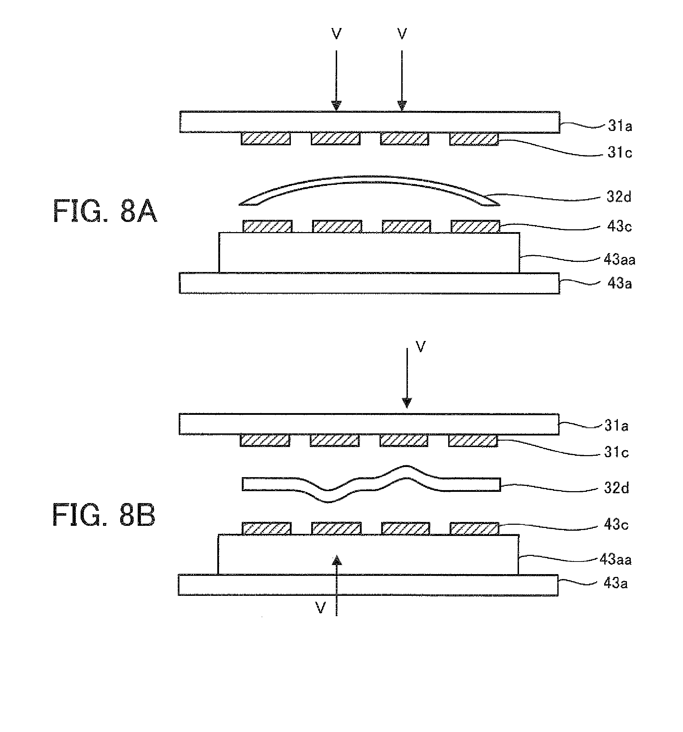

Figs. 8(A) and 8(B) are schematic sectional views for describing the principles underlying the operation of the optical wavefront control section included in the optical wavefront control system according to the second embodiment of the present invention. In Figs. 8(A) and 8(B), only the micromirror 32d of the mirror substrate 32 is shown. The spacers 32f, the frame portion of the Si substrate 32a over which the spacers 32f are formed, the SiO₂ layer 32b, the Si layer 32c, and the torsion bars 32e are not shown.

First a description will be given with reference to Fig. 8(A). Voltage V is applied to, for example, two middle ITO electrodes 31c formed over the glass substrate 31a of the upper glass substrate 31. As a result, attraction is exerted on a region of the micromirror 32d approximately right under the ITO electrodes 31c to which the voltage V is applied, so the micromirror 32d is distorted as if it is being pulled upward.

Then a description will be given with reference to Fig. 8(B). Voltage V is applied to, for example, a second ITO electrode 31c from the right formed over the glass substrate 31a and a second electrode 43c from the left formed over the projection 43aa formed over the glass substrate 43a. As a result, attraction is exerted on the micromirror 32d by the ITO electrode 31c and the electrode 43c to which the voltage V is applied, so the micromirror 32d is distorted as if it is being pulled upward and downward.

As stated above, by applying the voltage V to an ITO electrode 31c of the upper glass substrate 31 and/or an electrode 43c of the lower glass substrate 43 in this way, attraction is exerted on the micromirror 32d and the micromirror 32d is distorted as if it is being pulled upward or downward. With the optical wavefront control section in particular included in the optical wavefront control system according to the second embodiment of the present invention, the plurality of electrodes 43c are arranged like a grid over the lower glass substrate 43. Therefore, compared with the lower glass substrate 33 of the optical wavefront control section 30 included in the optical wavefront control system according to the first embodiment of the present invention, the micromirror 32d can be controlled with accuracy. That is to say, an optical wavefront can be controlled with great accuracy and an aberration can be corrected with great accuracy.

A third embodiment of the present invention will now be described.

With the first or second embodiment of the present invention, the descriptions are given with the case where the mirror substrate, the upper glass substrate, and the lower glass substrate are combined to form the optical wavefront control section as an example. With a third embodiment of the present invention, descriptions will be given with the case where only a mirror substrate and an upper glass substrate are combined.

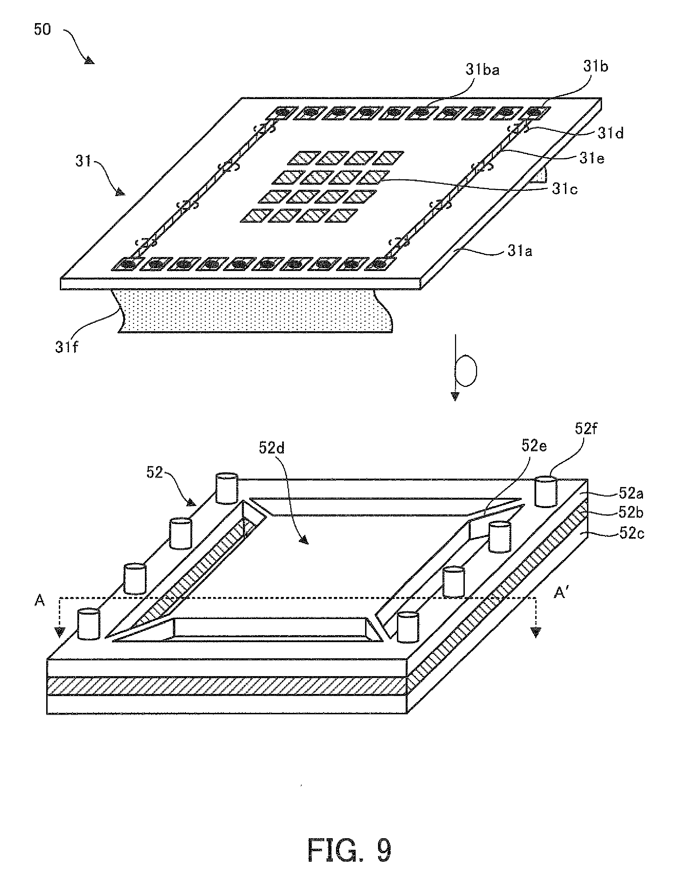

Fig. 9 is a schematic perspective view showing an optical wavefront control section included in an optical wavefront control system according to a third embodiment of the present invention.

An optical wavefront control section 50 includes the upper glass substrate 31 shown in Fig. 3 and a mirror substrate 52. The upper glass substrate 31 and the mirror substrate 52 shown in Fig. 9 are separated from each other, but in reality the upper glass substrate 31 and the mirror substrate 52 are combined to form the optical wavefront control section 50. When the upper glass substrate 31 and the mirror substrate 52 are combined, the upper glass substrate 31 is reversed so that spacers 52f formed over the mirror substrate 52 will be joined to the spacer pasting positions 31d.

As stated above, the upper glass substrate 31 includes a glass substrate 31a over which the electrode pads 31b, the ITO electrodes 31c, and the micromirror potential wirings 31e are formed, over which the spacer pasting positions 31d are marked, and to which the flexible substrates 31f are connected via the penetrating electrodes 31ba.

The mirror substrate 52 has an SOI structure including a Si substrate 52a, a SiO₂ layer 52b, and a Si layer 52c. In addition, inner walls of the Si substrate 52a, torsion bars 52e, and a micromirror 52d are integrally formed. Unlike the Si layer 32c shown in Fig. 3, the Si layer 52c of the mirror substrate 52 is not like a frame but like a layer. That is to say, the inside of the Si layer 52c of the mirror substrate 52 is not removed. As stated above, in order to raise the reflectance of the micromirror 52d, a metal film may be formed on the surface of the micromirror 52d. Moreover, the spacers 52f are formed over a frame portion of the Si substrate 52a. As stated above, the spacers 52f are joined to the spacer pasting positions 31d marked over the micromirror potential wirings 31e of the upper glass substrate 31 as spacers between the upper glass substrate 31 and the mirror substrate 52. The spacers 52f are solder bumps of, for example, gold (Au) and tin (Sn) and also functions as wirings for carrying potential to be applied from the micromirror potential wirings 31e connected to the electrode pads 31b to the micromirror 52d to the Si substrate 52a. For example, the mirror substrate 52 is 100 to 3,000 µm in length, 100 to 3,000 µm in breadth, and 10 to 3,000 µm in thickness. For example, the micromirror 52d is 0.1 to 100 µm in length, 0.1 to 100 µm in breadth, and 0.1 to 500 µm in thickness.

The principles underlying controlling an optical wavefront and correcting an aberration by the use of the optical wavefront control section 50 having the above structure will now be described.

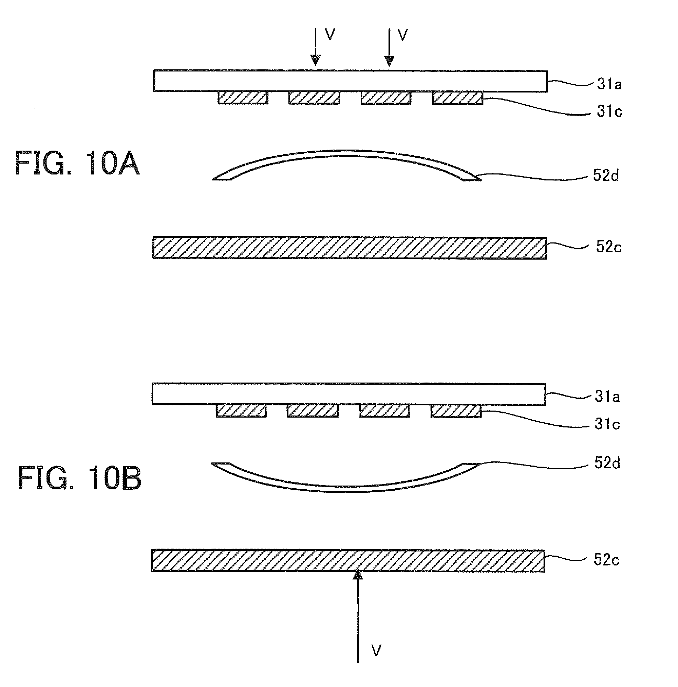

Figs. 10(A) and 10(B) are schematic sectional views for describing the principles underlying the operation of the optical wavefront control section included in the optical wavefront control system according to the third embodiment of the present invention. In Figs. 10(A) and 10(B), only the micromirror 52d and the Si layer 52c of the mirror substrate 52 is shown. The spacers 52f, the frame portion of the Si substrate 52a over which the spacers 52f are formed, the SiO₂ layer 52b, and the torsion bars 52e are not shown.

First a description will be given with reference to Fig. 10(A). Voltage V is applied to, for example, the two middle ITO electrodes 31c formed over the glass substrate 31a of the upper glass substrate 31. As a result, as state above, attraction is exerted on a region of the micromirror 32d approximately right under the ITO electrodes 31c to which the voltage V is applied, so the micromirror 32d is distorted as if it is being pulled upward.

Then a description will be given with reference to Fig. 10(B). Voltage V is applied to, for example, the Si layer 52c of the mirror substrate 52. As a result, attraction is exerted on the micromirror 52d by the Si layer 52c to which the voltage V is applied, so the micromirror 32d is distorted as if it is being pulled downward.

Therefore, by making the Si layer 52c of the mirror substrate 52 a layer and applying the voltage V to the Si layer 52c, the micromirror 52d can be controlled. By adopting the above structure, the number of components included in the optical wavefront control section 50 can be reduced. As a result, the costs of fabricating the optical wavefront control section 50 are reduced. In addition, an optical wavefront can be controlled with great accuracy and an aberration can be corrected with great accuracy.

A fourth embodiment of the present invention will now be described.

With the first, second, or third embodiment of the present invention, the descriptions are given with the case where the shape of the mirror substrate of the optical wavefront control section is approximately square as an example. With a fourth embodiment of the present invention, descriptions will be given with the case where a micromirror of a mirror substrate is circular as an example.

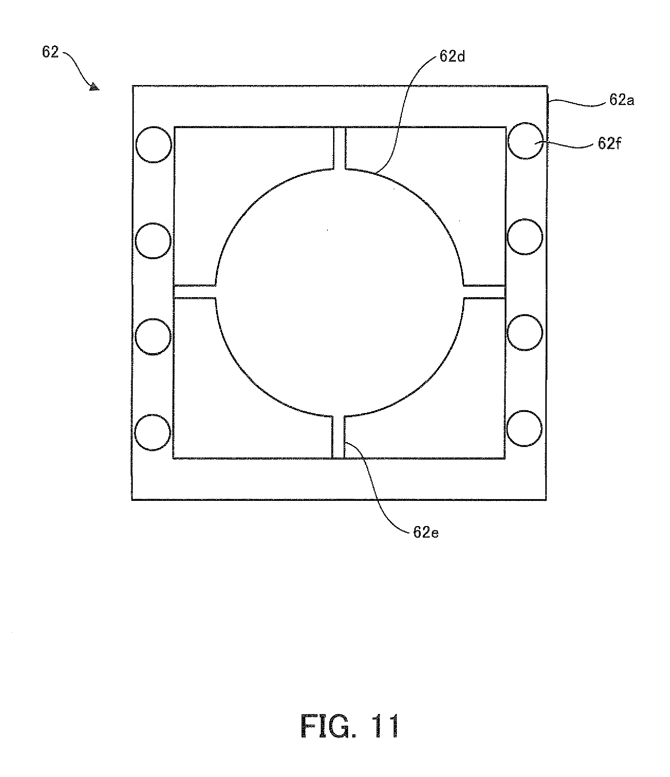

Fig. 11 is a schematic plan view showing a mirror substrate included in an optical wavefront control section included in an optical wavefront control system according to a fourth embodiment of the present invention.

A mirror substrate 62 has an SOI structure including a Si substrate 62a, a SiO₂ layer (not shown), and a Si layer (not shown). This is the same with the above mirror substrate 32. Moreover, spacers 62f are formed over a frame portion of the Si substrate 62a. The structure and function of the spacers 62f are the same as those of the above spacers 32f. In addition, a circular micromirror 62d surrounded by torsion bars 62e integrated into inner walls of the Si substrate 62a is formed in the mirror substrate 62. As stated above, in order to raise the reflectance of the micromirror 62d, a metal film may be formed on the surface of the micromirror 62d. For example, the mirror substrate 62 is 100 to 3,000 µm in length, 100 to 3,000 µm in breadth, and 10 to 3,000 µm in thickness. For example, the micromirror 62d is 0.1 µm to 5 mm in diameter and 0.1 to 500 µm in thickness.

Each of an upper glass substrate and a lower glass substrate which are combined with the mirror substrate 62 has, for example, the following structure.

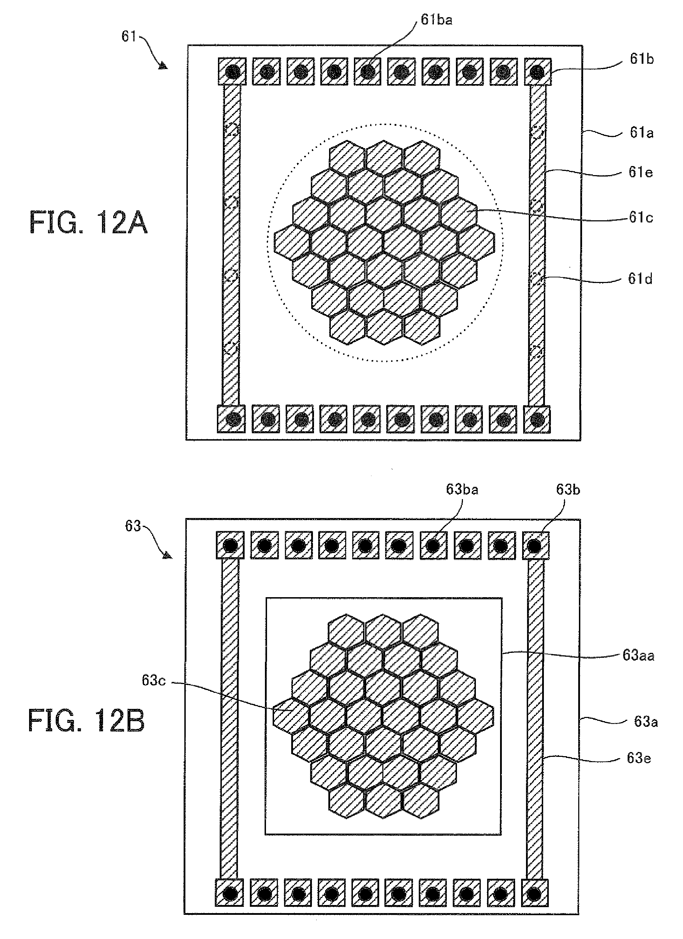

Figs. 12 (A) and 12(B) are schematic plan views showing an upper glass substrate and a lower glass substrate, respectively, included in the optical wavefront control section included in the optical wavefront control system according to the fourth embodiment of the present invention.

An upper glass substrate 61 includes a glass substrate 61a over which electrode pads 61b, ITO electrodes 61c, and micromirror potential wirings 61e are formed and over which spacer pasting positions 61d are indicated and flexible substrates (not shown). This is the same with the above upper glass substrate 31. However, the shape of each ITO electrode 61c is, for example, hexagonal and the ITO electrodes 61c are arranged to form a nearly round shape. By doing so, the ITO electrodes 61c are located right over the circular micromirror 62d of the mirror substrate 62. The flexible substrates are mounted so that they will be touching penetrating electrodes 61ba. For example, the upper glass substrate 61 is 5 to 50 mm in length, 5 to 50 mm in breadth, and 100 µm to 1 mm in thickness.

The following ITO electrodes may be used in place of the ITO electrodes 61c of the upper glass substrate 61.

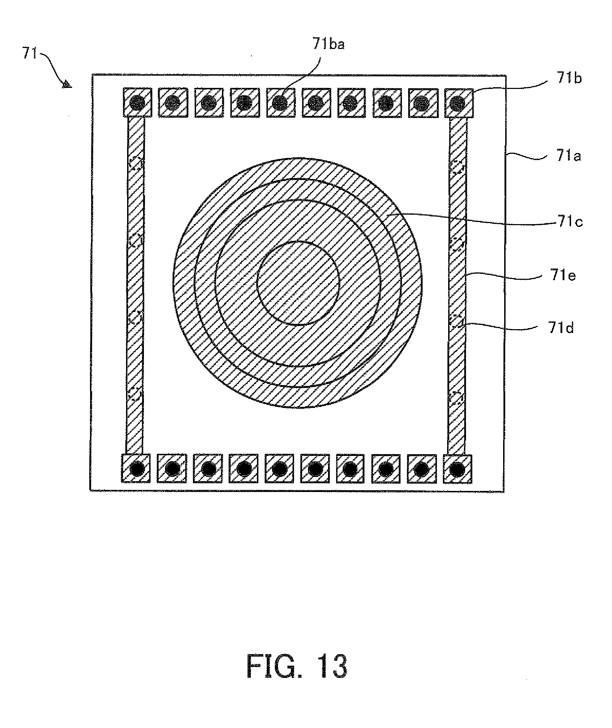

Fig. 13 is a schematic plan view showing another upper glass substrate included in the optical wavefront control section included in the optical wavefront control system according to the fourth embodiment of the present invention.

An upper glass substrate 71 shown in Fig. 13 includes a glass substrate 71a over which electrode pads 71b, an ITO electrode 71c, and micromirror potential wirings 71e are formed and over which spacer pasting positions 71d are indicated and flexible substrates (not shown). This is the same with the upper glass substrate 61. The flexible substrates are mounted so that they will be touching penetrating electrodes 71ba. However, the ITO electrode 71c like concentric circles is formed so that it will be located right over the circular micromirror 62d of the mirror substrate 62. For example, the upper glass substrate 71 is 5 to 50 mm in length, 5 to 50 mm in breadth, and 100 µm to 1 mm in thickness.

As shown in Fig. 12(B), on the other hand, a lower glass substrate 63 includes a glass substrate 63a over which electrode pads 63b and micromirror potential wirings 63e are formed and flexible substrates (not shown). This is the same with the above lower glass substrate 33. The flexible substrates are mounted so that they will be touching penetrating electrodes 63ba. A projection 63aa is formed over the lower glass substrate 63. Hexagonal electrodes 63c are formed over the projection 63aa so that they will form a nearly round shape. This is the same with the upper glass substrate 61. For example, the lower glass substrate 63 is 5 to 50 mm in length, 5 to 50 mm in breadth, and 100 to 2,000 µm in thickness. For example, the projection 63aa is 100 µm to 5 mm in length, 100 µm to 5 mm in breadth, and 10 µm to 1 mm in height. The projection 33aa is made equal in height to the SiO₂ layer of the mirror substrate 62.

In the optical wavefront control section (not shown) including the above upper glass substrate 61 and lower glass substrate 63, voltage V is applied to an ITO electrode 61c of the upper glass substrate 61 and/or an electrode 63c of the lower glass substrate 63. By doing so, attraction is exerted on the micromirror 62d, so the micromirror 62d is distorted as if it is being pulled upward or downward. The micromirror 62d can be controlled in this way with great accuracy. Therefore, with the optical wavefront control system including the optical wavefront control section having the above structure, it is also possible to control an optical wavefront and correct an aberration while reducing the number of optical components and costs. The circular micromirror used in the optical wavefront control section included in the optical wavefront control system according to the fourth embodiment of the present invention may be applied to the optical wavefront control section included in the optical wavefront control system according to the third embodiment of the present invention.

In addition, the optical wavefront control system according to the first, second, third, or fourth embodiment of the present invention including the optical wavefront control section can be incorporated in various optical devices. In the field of optical communication, for example, the above optical wavefront control system can be located for each ray dispersed by the use of a virtually imaged phase array (VIPA) dispersion compensator. By doing so, an optical wavefront can be controlled and light an aberration of which is corrected can be outputted. Moreover, the above optical wavefront control system can be used with various optical components.

With the above optical wavefront control systems, optical wavefront control devices, and optical wavefront control method, it is possible to control an optical wavefront and correct an aberration while reducing the number of optical components and costs.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

## Claims

1. An optical wavefront control system for controlling a wavefront of input light and for outputting wavefront-shaped output light, the system comprising:
an optical wavefront control section for controlling, in accordance with a wavefront control signal for controlling a phase of the wavefront of the input light inputted and an aberration control signal for controlling an aberration of the input light inputted, the phase and the aberration of the input light and for outputting the output light;
a detection section for detecting optical information regarding a wavefront and an aberration of the output light inputted from the optical wavefront control section; and
a control circuit section for outputting the wavefront control signal and the aberration control signal to the optical wavefront control section on the basis of the optical information detected by the detection section.

2. The optical wavefront control system according to claim 1, further comprising an input optical system for collimating the input light and inputting the input light to the optical wavefront control section.

3. The optical wavefront control system according to claim 1 or 2, further comprising an optical path change section, wherein the output light outputted from the optical wavefront control section is inputted to the detection section via the optical path change section.

4. The optical wavefront control system according to claim 3, further comprising a second optical path change section, wherein the output light outputted from the optical path change section is inputted to the detection section and is outputted to an outside, via the second optical path change section.

5. The optical wavefront control system according to claim 3, wherein the optical path change section is one of a half mirror, a splitter, and a circulator.

6. The optical wavefront control system according to any one of the preceding claims, wherein the aberration control signal is based on a Zernike polynomial.

7. The optical wavefront control system according to any one of the preceding claims, further comprising a wavefront monitor for detecting the output light and for displaying a two-dimensional image.

8. The optical wavefront control system according to any one of the preceding claims, wherein the optical wavefront control section includes:
a mirror substrate having a bottom portion including a frame-like supporting substrate layer and a frame-like intermediate layer formed in order and a device portion which is formed over the bottom portion, in which inner walls, torsion bars, and a micromirror are integrally formed, and over a frame portion of which spacers are formed;
an upper glass substrate over which a plurality of transparent electrodes are formed right over a reflecting surface of the micromirror, which is connected to the mirror substrate via the spacers, and into which the wavefront control signal is inputted; and
a lower glass substrate which has a projection which is equal in height to the intermediate layer and over which an electrode is formed, which is connected to the mirror substrate by fitting the projection into the bottom portion, and into which the aberration control signal is inputted.

9. The optical wavefront control system according to claim 8, wherein the mirror substrate has an SOI structure in which the supporting substrate layer and the device portion are made of silicon and in which the intermediate layer is made of silicon oxide.

10. The optical wavefront control system according to claim 8 or 9, wherein the plurality of transparent electrodes are made of indium tin oxide.

11. The optical wavefront control system according to any of claims 8 to 10, wherein the micromirror has a round or square shape.

12. The optical wavefront control system according to any of claims 8 to 11, wherein the electrode is opposite to the plurality of transparent electrodes.

13. The optical wavefront control system according to any of claims 8 to 12, wherein a lower substrate layer to which voltage is applied is included under the intermediate layer in place of the lower glass substrate and the supporting substrate layer.

14. An optical wavefront control device for controlling a wavefront of input light and for outputting wavefront-shaped output light, the device comprising:
a mirror substrate having a bottom portion including a frame-like supporting substrate layer and a frame-like intermediate layer formed in order and a device portion which is formed over the bottom portion, in which inner walls, torsion bars, and a micromirror are integrally formed, and over a frame portion of which spacers are formed;
an upper glass substrate over which a plurality of transparent electrodes are arranged right over a reflecting surface of the micromirror and which is joined to the mirror substrate with the spacers between; and
a lower glass substrate which has a projection which is equal in height to the intermediate layer and over which an electrode is formed, and which is connected to the mirror substrate by fitting the projection into the bottom portion.

15. The optical wavefront control device according to claim 14, wherein the mirror substrate has an SOI structure in which the supporting substrate layer and the device portion are made of silicon and in which the intermediate layer is made of silicon oxide.

16. The optical wavefront control device according to claim 14 or 15, wherein the plurality of transparent electrodes are made of indium tin oxide.

17. The optical wavefront control device according to any of claims 14 to 16, wherein the micromirror has a round or square shape.

18. The optical wavefront control device according to any of claims 14 to 17, wherein the electrode is opposite to the plurality of transparent electrodes.

19. The optical wavefront control device according to any of claims 14 to 18, wherein a lower substrate layer to which voltage is applied is included under the intermediate layer in place of the lower glass substrate and the supporting substrate layer.

20. An optical wavefront control method for controlling a wavefront of input light and for outputting wavefront-shaped output light, the method comprising:
controlling, by an optical wavefront control section in accordance with a wavefront control signal for controlling a phase of the wavefront of the input light inputted and an aberration control signal for controlling an aberration of the input light inputted, the phase and the aberration of the input light and outputting the output light;
detecting, by a detection section, optical information regarding a wavefront and an aberration of the output light inputted from the optical wavefront control section; and
outputting, by a control circuit section, the wavefront control signal and the aberration control signal to the optical wavefront control section on the basis of the optical information detected by the detection section.
